# EUROPEAN PATENT APPLICATION

(11) **EP 1 995 915 A2**
(43) Date of publication of application: **26.11.2008**
(21) Application number: 08380147.2
(22) Date of filing: 12.05.2008
(51) Int. Cl.: H04L 12/28, H04L 12/56

(54) **Two-directional wireless communication method and corresponding system, terminal and uses**

(30) Priority: 16.05.2007 ES 200701315
(71) Applicant: Centre de Transferencia de Tecnologia S.L. (CTT), 08006 Barcelona (ES)
(72) Inventor: Perello Vallès, Josep, 08849 Sant Climent de Llobregat (Barcelona) (ES); Villalonga Florit, Pancrac, 08030 Barcelona (ES)
(74) Representative: Curell Aguilà, Marcelino

(57) **Abstract**

Two-directional wireless communication method and corresponding system, terminal and uses. Two-directional wireless communication method for transmitting voice, audio or video messages, divided into packages, in real time between two terminals, comprising the following stages;
- set up an asynchronous communication network without the transmission of confirmation messages, which complies with the requirements of the IEEE 802.15.4 standard and/or with the Zigbee protocol,
- both terminals start an uninterrupted sequence for encoding its respective packages, where the second terminal loads into memory each package it has encoded,
- after completing the encoding of the first package, the first terminal transmits it and starts a sequence in which it transmits the next package as soon as it has encoded it,
- each time that the second terminal correctly receives one of the packages, it transmits to the first terminal the last encoded package it has placed in memory.

## Description

### Field of the invention

The invention relates to a two-directional wireless communication method suitable for transmitting a voice, audio or video message in real time from a first terminal to a second terminal, where the message is divided into a plurality of digitalized packages, and suitable for transmitting a second voice, audio or video message in real time from the second terminal to the first terminal, where the second message, in turn, is divided into a plurality of digitalized second packages. The invention also relates to a communication system comprising at least two terminals, where each terminal comprises a device for emitting and receiving radio signals within one of the frequency bandwidths in the group made up of 2'4 GHz, 915 MHz and 868 MHz bands, and a logical circuit comprising a microprocessor, suitable for running the method according to the invention. Also the invention relates to uses of the IEEE 802.15.4 standard and the Zigbee protocol for implementing the method according to the invention as well as the usage of terminals that are compatible with the IEEE 802.15.4 standard and/or with the Zigbee protocol for running the method according to the invention.

### State of the art

Various wireless communication methods, both one- and two-directional, are known for transmitting voice, audio and/or video messages in real time. Examples of these methods are those used in the Bluetooth ® technologies, based on IEEE 802.15.1 protocol, WiFI, based on IEEE 802.11 a/b/g protocol, and DECT (Digital Enhanced Cordless Telecommunications). Nevertheless, these methods suffer various drawbacks: they have a high energy consumption level, which is a problem particularly if they are implemented in portable and/or autonomous (from the point of view of the energy supply) devices, they have limited action radii, are complex to install, etc.

So, for example, the Bluetooth ® protocol can transmit audio and video messages, and to do so it must operate at high communication speeds (1 Mbps). Consequently, for a low consumption level it has a very low action radius (about 10 m for a radio frequency emission power of 1 mW).

For their part, the DECT and WiFI technologies, both used, for example, in wireless telephones, transmit voice messages over larger distances (up to 50 m and 30 m, respectively), but at the cost of a much higher consumption level.

### Disclosure of the invention

The purpose of the invention is to overcome these drawbacks. This aim is achieved by means of a two-directional wireless communication method of the type indicated at the beginning, characterized in that it comprises the following stages:
a - an at least partially asynchronous communication network is set up that comprises both terminals, suitable for setting up communication between both terminals, with a communication speed of 250 kbps, 40 kbps or 20 kbps, where said communication incorporates the DSSS (Direct Sequence Spread Spectrum) widened spectrum modulation technique using a set frequency, where each of the two terminals, before transmitting, listens to see if the frequency at which it is going to transmit is free (CSMA-CA), where each terminal encodes the packages and second packages before transmitting them, using a codec that has a maximum bandwidth of 85 kbps, and subsequently decodes them,
b - it is defined that the communication between the first terminal and the second terminal must be without transmitting confirmation messages,
c1 - the first terminal starts a package encoding sequence, so that each time the encoding of one of the packages finishes, the encoding of the next package begins,
c2 - the second terminal starts an encoding sequence of the second packages, so that each time the encoding of one of the second packages finishes, the encoding of the next second package begins, where the second terminal loads into memory each second package whose encoding has been completed,
   where the encoding sequences of stages c1 and c2 are carried out in parallel and, also the following stages occur in parallel with the encoding sequences:
d - once the encoding of the first of the packages has finished, the first terminal transmits the first of the packages, and the first terminal starts a sequence in which it transmits the next package as soon as it is encoded until the message is finished,
e - each time that the second terminal correctly receives one of the packages, it transmits to the first terminal the last second encoded package that it has loaded into memory.

Effectively the method according to the invention combines a series of characteristics whereby the above-mentioned drawbacks can be overcome. It is a method that has a low energy consumption level thanks, *inter alia,* to its low communication speed and its DSSS modulation technique, whereby it is highly sensitive to radio frequency receivers. It is a method that has a large action radius and is simple to implement. In spite of its low communication speed, it can transmit voice, audio and even video messages in real time in two directions between the two terminals.

To do this it has to use codecs with a maximum bandwidth of 85 kbps. Codec is an abbreviation for encoder-decoder, commonly used in this technical sector, and basically it is an information compression algorithm, whereby the codec, on the one hand, can compress the information and, subsequently, decompress it to reconstruct the original information. The quality of the reconstructed information will depend on the properties of the codec. One of the reasons for compressing the information is to reduce the volume of information to transmit (other reasons could be, for example, for storing or coding the information). In this respect, the codecs are particularly important for transmitting voice, audio, and/or video messages in real time, because in these cases the time used to transmit the various packages of information it clearly shortened. At present there are codecs on the market that can process voice, audio and even video messages, with a high quality and with bandwidths even lower than 85 kbps. Various compression methods and codecs are available on the market, such as for example PCM (Pulse Code Modulation, codec G.711) voice codecs, ADPCM (Adaptative Pulse Code Modulation, codec G.721/6), PureVoice, SmartRate, AMR, Speex, iLBC, GSM, etc. The method according to the invention preferably uses the G.723.5 codec, with a bandwidth of 8.5 kbps, to transmit voice and audio, and the H.264 codec (known as MPEG-4 AVC) for transmitting video. Other interesting codecs are codecs G.723.1 and G.729. Logically, the method can be compatible with any codec currently used or which may be developed in the future, providing it complies with the maximum bandwidth requirement.

It is also required that the communication method does not transmit confirmation messages. Effectively, in many of the usual communication methods the receiver emits a confirmation message after receiving a package of information. Usually these communication methods have mechanisms whereby the absence of this confirmation message causes the emitter to emit the same package of information again several times. This strategy is aimed at guaranteeing that all the information is transmitted completely and accurately. Nevertheless it has been observed that in the real time transmission of voice, audio and/or video messages it is not particularly serious if a package of information is lost. It is much more important that the continuous flow of the message is not interrupted. In this respect, the transmission of confirmation messages slows down communication to a large degree, since it consumes a non-depreciable bandwidth. In this invention it has been observed that it is advantageous to not include any type of confirmation messages. This way a greater bandwidth is available, albeit at the cost of one package of information perhaps getting lost at one point. This greater bandwidth, together with the remaining characteristics of the invention (such as for example the relatively reduced communication speed) allows an optimum balance to be reached between low consumption, large action radius and good quality transmission of the voice, audio and/or video message. Given that the communication method according to the invention can be implemented in the more generally used standards or protocols (as will be discussed later), that have confirmation messages as a pre-set option, then it must be envisaged that the method comprises a stage wherein it is defined that the particular communication to be performed is to be without said confirmation messages.

The method whereby a terminal, before transmitting, listens to see if the frequency at which it is going to transmit is free is a known method. A preferred example of this is the CSMA-CA (Carrier Sense Multiple Access with Collision Avoidance) method. Basically it consists in the terminal listening to the medium at the frequency at which it is going to transmit and, if it detects that said frequency is being used for transmission, it waits a random time period before trying the transmission again. This reduces the probability of collisions. Nevertheless, generally, the CSMA-CA method cannot totally remove all risk of collision. In this respect, the method according to the invention improves this situation as it reduces the risk of collision even more. In fact, when starting communication the second terminal does not emit until it has received a package from the first terminal. This avoids a first collision between both terminals. Once a first package has been received from the first terminal, the second terminal can now send its package. Neither in this case can there be any collision since the first terminal will, at this time, be encoding the next package. From then onwards, it will be the encoding time of the first terminal that sets the communication rhythm, thereby establishing a kind of synchronisation between both terminals. The first terminal will send its package when it has encoded it and the second terminal will send a second package each time it receives a package from the first terminal. This way a possible collision between the packages is constantly avoided. Given that there are no confirmation messages either, and that any message that has had some kind of problem is disregarded instead of being repeated, the resulting communication is an agile crossed package passage, reminiscent of the ball game called ping-pong (table tennis). This method optimises communication as it allows use of the available bandwidth to be optimised, as well as different codecs. As will be discussed later, any possible interference or collision from other devices is avoided by other means.

Depending on how the communication network is defined, setting up the communication between both terminals so that it is without confirmation messages setting (stage b) may have to be done each time a new communication is started between both terminals or, on the contrary, it may only have to be done once, after which time the subsequent communication is without confirmation messages.

In fact, the communication that is established between both terminals is not a two-directional communication in the sense that the packages in one direction cross with the packages in the other direction, along different channels. In fact, one single channel is being used along which the packages in one and the other direction are alternated. In other words, it is a two-directional communication from the point of view of the user, as information can be sent from the first terminal to the second terminal and vice versa, simultaneously (from the user's point of view) in real time, although really one single radio frequency channel is used. Therefore, it could be said that it is a semi two-directional or semi-duplex communication.

As already indicated previously, the second terminal encodes the second packages at the rhythm marked by the encoding speed of the codec. Once one of the second packages has been encoded (called second package n), it is loaded into a memory so that it can be sent in the event a package is received from the first (which is stage e mentioned above). Nevertheless, once the encoding of the next of the second packages has finished (second package n+1), the new second package n+1 is loaded into the memory and the second package n is no longer of interest, as now it will not be sent. Therefore, preferably, the second terminal has loaded in the memory only the last of the second encoded second packages, so that each time it loads a new coded second package, it disregards the former.

Preferably the method according to the invention uses data packages, called data frame, according to IEEE 802.15.4 standard, as approved in 2003. Hereinafter, each time reference is made to the IEEE 802.15.4 standard, said standard will be referenced as it was approved in 2003. This means that the method uses certain characteristics as defined in said standard on said date although, logically, the method can be applicable to any subsequent version of the standard providing that it maintains the same definition of the characteristics in question.

Advantageously the method according to the invention can use the said data packages according to IEEE 802.15.4 standard, but with the MAC header reduced. In fact, once the communication network is set up, the head can be reduced, in particular, the addressing fields can be reduced. This way each data package can include more information thus increasing the available bandwidth for the codec.

A particularly advantageous way is obtained by reducing the addressing fields field of the MAC head by 16 bytes, since a reduced address of 2 bytes in length is used both for the first terminal and for the second terminal so that the addressing field is reduced from 20 bytes to 4 bytes.

Another advantageous alternative consists in using data packages in the APL application layer, either in the APS sublayer or in the Application object sublayer, according to the Zigbee protocol as approved in its first version v. 1.0 on 14 December 2004. As in the case of the standard, hereinafter, each time reference is made to the Zigbee protocol, said protocol will be referenced in its version 1.0 and as it was approved on 14 December 2004. Also, as in the case of the standard, this means that the method uses certain characteristics as defined in said protocol on said date although, logically, the method can be applicable to any subsequent version of the protocol providing that it maintains the same definition of the characteristics in question. Preferably, once the communication is established, the MAC head of said data packages has been reduced by 14 bytes in the addressing fields field, using reduced addresses of two bytes in length both for the first terminal and the second terminal, and using 2 bytes for identifying the network, so that the addressing fields field is reduced from 20 bytes to 6 bytes.

Preferably one of the terminals operates as a coordinator, as defined in IEEE 802.15.4 standard.

The method according to the invention operates in an asynchronous manner. This does not mean that the whole communication method is completely asynchronous. Instead it means that it can be carried out within the framework of a synchronous communication method and that it includes asynchronous time windows between each pair of beacon signals in which the terminals can carry out asynchronous communication. So, for example, a network synchronised according to IEEE 802.15.4 standard has the time between the beacon signals divided into two blocks; a first block, called CAP (Contention Access Period) within which an asynchronous communication can be established (which is, for example, the time lapse that a new terminal wishing to integrate into the network takes to send its network integration request message) and a second CFP (Contention-Free Period) that is divided into GTS (Guaranteed Time Slot) spaces, where each GTS space is assigned to a network terminal. In this case, preferably in each CAP block one package would be transmitted by each terminal. Nevertheless, preferably the method according to the invention is one that is carried out in a completely asynchronous communication network. This avails of the maximum available bandwidth and reduces energy consumption to a minimum, since it is not necessary to emit a beacon. It has also the advantage that the asynchronous network allows greater freedom for choosing codecs. Additionally, in this particular case, new repeaters can be included to increase the coverage.

Advantageously the first terminal numbers the packages and the second terminal controls the number of the received package, disregarding it if the number coincides with the number of an already received package. This avoids problems with duplicated packages, for example due to signal rebounds.

Preferably the communication speed is 250 kbps. In fact, this is the speed that will allow better quality codecs to be used. Additionally is the greatest communication speed envisaged by the IEEE 802.15.4 standard and the Zigbee protocol.

Another advantageous embodiment of the invention method is obtained when each terminal sets a reception time during which it remains listening to receive the package transmitted by the other terminal, and outside which it disregards any reception considering it to be an interference, where the first terminal starts the reception time from when it has sent the previous package and where the second terminal starts the reception time just before it sends the following second package. This way, both terminal listen to the medium during a time period in which, approximately, they should receive the package transmitted by the other terminal and, on the other hand, disregard any signal outside this time period, considering it to be a noise. This method allows the communication system to be more robust and less sensitive to interferences. As it can be seen, each terminal locates the reception time in a different way. In fact, the first terminal is the one that will end up marking the communication rhythm, as it will emit a package each time the codec has encoded a package. On the other hand, the second terminal will have encoded its second package approximately simultaneously (preferably beforehand) to the first terminal. Therefore, once the first terminal has sent its package, it starts to count the reception time, as the second terminal already has its second package encoded and, once it has received the first package, it can start to transmit the second package. For its part, the second terminal, when it receives the first package from the first terminal, knows when it will receive the following first packages, and from there, it can calculate the reception time counting backwards. This way external interferences are disregarded, and if one package has a one-off problem the communication between both terminals is prevented from being interrupted.

Preferably stage c comprises, additionally, the following stage before stages c1 and c2:
c0 - the first terminal abandons a low energy consumption mode and waits for the second terminal to abandon a low energy consumption mode and transmit to the first terminal a query as to whether it wants to start communication.

In fact, various communication methods have defined low energy consumption status or modes, wherein the terminals reduce their energy consumption based on adopting certain configurations. Usually these modes or status are called "sleeping state" or the like. Generally a terminal in sleeping state wakes up regularly to check whether it should perform any action. In order to set up communication between two terminals it is necessary for both to be "awake", and to this end the terminal that wants to set up communication remains awake and waits for the other terminal to wake up and emits a query as to whether it must perform some action, which is when the first terminal requires it to remain awake as it wants to start communication.

Advantageously the encoding sequences in stages c1 and c2 are time shifted so that the second terminal completes the encoding of each of the second packages before receiving the corresponding package.

The object of the invention is also a communication system comprising at least two terminals, where each terminal comprises a device for emitting and receiving radio signals within one of the frequency bands in the group made up of the bands 2'4 GHz, 915 MHz and 868 MHz, and a logical circuit comprising a microprocessor, suitable for running the method according to the invention. Usually these terminals have the radio signal emission and reception device and the logical circuit comprising a microprocessor integrated into a single chip. The object of the invention is also each of these terminals.

A preferable use according to the invention is the use of the IEEE 802.15.4 standard and, preferably, the Zigbee protocol, to implement the method according to the invention. In fact, the object of the IEEE 802.15.4 standard is, in fact, to set up low consumption and large action radius communication systems. Nevertheless the system is not envisaged to transmit voice, audio and/or video messages in real time. By implementing the method according to the invention one manages to integrate the advantages of the IEEE 802.15.4 standard (and the Zigbee protocol) in a system for transmitting voice, audio and/or video messages in real time. For this same reason it is an advantage to use a terminal that is compatible with the IEEE 802.15.4 standard, or with the Zigbee protocol, to run the method according to the invention. A particularly interesting advantage is that the system (or the terminal) is compatible with the Zigbee protocol because, this way, it is compatible with all the devices that comply with the Zigbee protocol.

Document EP 1.519.522 A2 describes a voice message communication method using the IEEE 802.15.4 standard. However, this method is very different as it requires using a synchronised communication network that uses a synchronous communication structure (called superframe structure) that is not compatible with the 802.15.4 standard or with the Zigbee protocol either. Consequently, its consumption is not minimised, it does not avail as much as possible of the available bandwidth, it is not flexible in the sense that it cannot use different codecs, and it is not compatible with other devices produced according to the Zigbee protocol.

### Brief description of the drawings

Other advantages and characteristics of the invention are appreciated from the following description, in which, in a non-limiting way, a preferable embodiment of the invention is described, with reference to the accompanying drawings, in which:
Fig. 1, shows a flow diagram of a method followed by a first terminal.
Fig. 2, shows a flow diagram of a method followed by a second terminal.
Fig. 3, shows a time diagram of the method according to the invention.
Fig. 4, shows a diagram of the heads included in each layer of packages.

### Detailed description of an embodiment of the invention

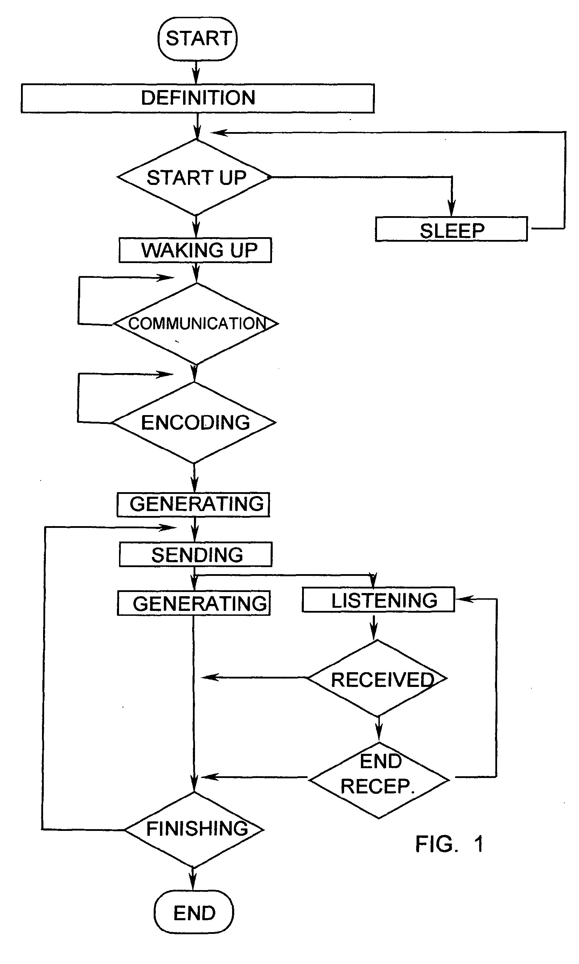

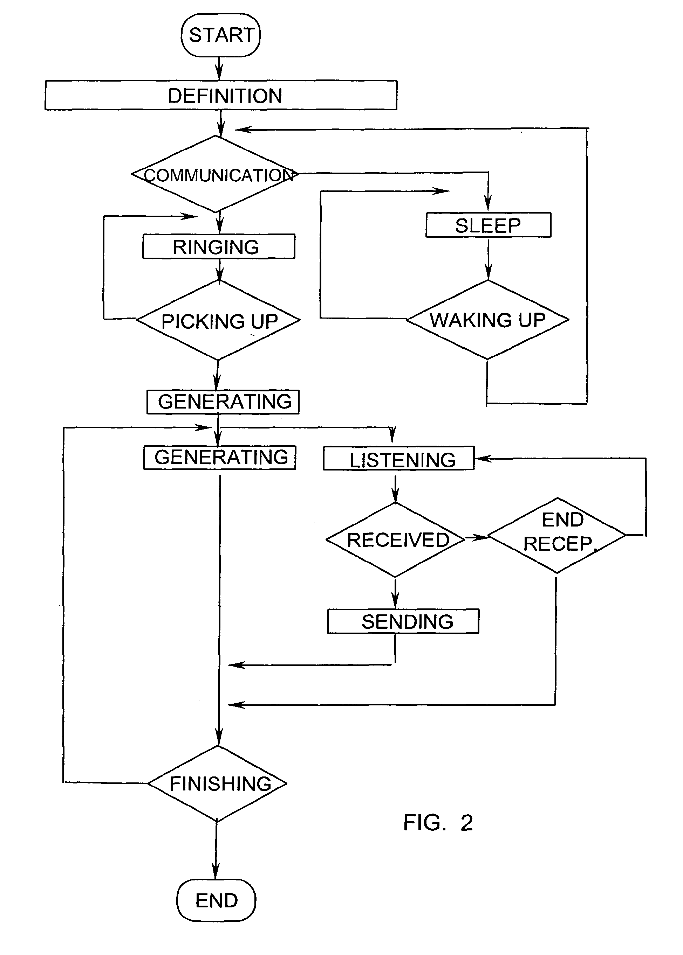

Figures 1 and 2 show an example of the operation that a first and a second terminal will follow when communication according to the invention.

There is a first stage, the DEFINITION stage, in which it is defined what the communication network must be like, in other words, where above-mentioned stages a and b are run. In addition all the actions needed to define and set up the communication network take place.

Both the first terminal, in other words, the terminal that wants to start communication, and the second terminal, are initially in a "sleeping" state. Regularly they wake up and enquire whether they must carry out a conversation. Otherwise the SLEEP instruction is run whereby they remain in the sleeping state for another pre-set time period.

When the first terminal receives an external instruction whereby it must set up communication, in the WAKING UP stage it wakes up and waits for the second terminal, when it wakes up, to enquire whether it must communicate. The first terminal responds in the affirmative to the second terminal so that both remain awake.

Then they continue to wait until the second terminal picks up the communication, starts its encoding and indicates to the first terminal that it can start its encoding and message transmission.

The first terminal, in the GENERATING stage starts the encoding sequence of the packages of the first message. Each time it finishes encoding a package, it sends it and, simultaneously, it starts encoding the following package. Once the package has been sent, the first terminal starts the LISTENING stage, during which it remains listening for a pre-set reception time to see whether it receives a second package from the second terminal. Both if the first terminal receives a second package from the second terminal and it does not receive it in the pre-set reception time (END RECEP. stage), the first terminal continues with the package generating and dispatch sequence until the message is complete.

For its part, the second terminal starts the encoding sequence of the second packages of the second message (GENERATING stage), and loads them in a memory of an element as it encodes them with just the last encoded package remaining. At the same time, the second terminal remains listening (LISTENING stage) during a pre-set reception time (END RECEP. stage). If a package is received from the first terminal, the second terminal sends the last of the encoded second packages (SENDING stage).

One way for the second terminal to encode each of the second packages before it receives the corresponding package from the first terminal is to make the second terminal start encoding and the first of the second packages in the same instant as it sends the first terminal the message indicating that it has picked up the communication. This way, since this message requires a certain time period until it is received by the first terminal, the first terminal will start encoding the first of the packages in the first message a little later. This way, the second terminal will always have the second package corresponding to a certain package, encoded before receiving said certain package, and will be able to send it as soon as it receives the corresponding package.

Generally the method according to the invention can be generalised perfectly for one-way communications, which will enjoy the above-mentioned advantages. Also, in the case of one-way communications, it is possible to envisage that there is a plurality of second terminals, in other words, that the packages sent by the first terminal are directed to a plurality of second terminals, and the permitted bandwidth is doubled, reaching 170 kbps.

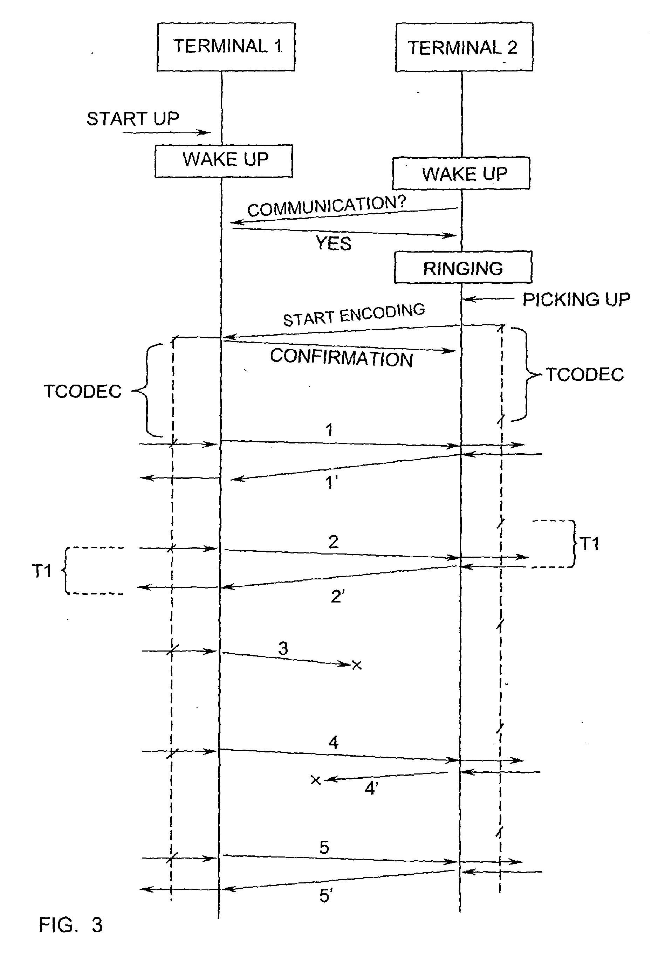

Figure 3 shows a time diagram of the different stages followed by both terminals. First of all, terminals 1 and 2 perform a series of stages and communications (not shown in the figure) to set up the communication network. After setting up the communications network both terminals remain in a low energy consumption state (also known as sleeping or, simple, "asleep"). Regularly each terminal comes out of its low energy consumption state (it "wakes up") and asks the other terminal if it must set up communication. If it does not receive any reply it returns to its low energy consumption state.

At a given time the first terminal (TERMINAL 1) receives an external order whereby it must start communication (START UP) with the second terminal (TERMINAL 2). The first terminal comes out of its low energy consumption state (WAKE UP) and waits for the second terminal to communicate with it. As soon as the second terminal wakes up and asks the first terminal if it must set up communication (COMMUNICATION?), the first terminal, which is already awake, replies in the affirmative (YES), after which the second terminal also remains awake and starts the actions to set up communication (RINGING). For example, if the second terminal were a telephone, it would start to ring so that the user picks it up. Once the actions for setting up the communication have been performed (PICKING UP, for example the user picks up the telephone), then the second terminal tells the first terminal that it is starting to encode the second packages forming the second message (START ENCOD.). The first terminal, when it receives this message, in turn starts to encode the packages forming the first message.

Optionally it can send a confirmation message (CONFIRMATION) to the second terminal.

Now the stages for transmitting the packages and second packages begin. The second terminal has started to encode the first of the second packages after picking up the communication. The time it takes to encode each second package (TCODEC) will depend on the codec used, but it will be constant for all the second packages of the second message. For its part, the first terminal starts encoding the first of the packages when it receives the message from the second terminal telling it that the latter has started encoding. Therefore, the first terminal starts encoding later. Consequently the encoding time (TCODEC) of the first terminal is delayed with respect to the encoding time of the second terminal.

Once the first terminal finishes encoding the first of the packages, it transmits it to the second terminal (1). When the second terminal receives the first of the packages, it has already encoding the first of the second packages, and it has kept it in a memory, starting to encode the next of the second packages. When it receives the first of the packages, the second terminal transmits the first of the second packages to the first terminal (1').

The first terminal will set the packages it encodes as soon as it finishes encoding each of them (2, 3, 4, 5). For its part, the second terminal will send the last second package that it has encoded each time it receives a package from the first terminal (2', 4', 5').
Figure 3 shows possible communication problems that may occur. For example if a package (3) does not reach the second terminal, the second terminal does not transmit any second package. When the second terminal finishes encoding the next second package, it will load it into the memory and will disregard the previous second package. For its part, the first terminal will sent a package each time it has it encoded (5) irrespective of whether it has received the previous second package (4').

Finally, Figure 3 also shows the time period during which each terminal waits to receive a package from the other terminal, called the reception time (T1). In the case of the first terminal the time T1 starts when the first terminal sends its package and is slightly longer than double the transmission time of one package (which corresponds to the time of sending a package and the time when the second terminal sends its package). Outside this time period, the first terminal does not "listen" as it supposes that what it may receive is not a second package but noise. In the case of the second terminal, the time period T1 is positioned taking into account that the end of said time period must coincide with the moment when the second terminal envisages sending the next of the second packages.

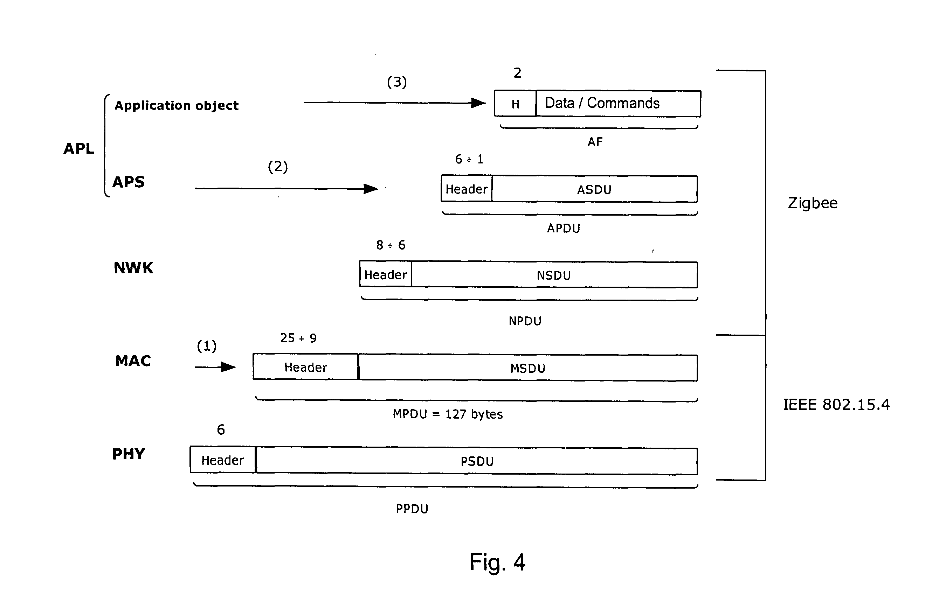

Figure 4 shows the length of the packages in each of the layers defined both in the IEEE 802.15.4 standard, and in the Zigbee protocol. Each layer includes its header with information that is relevant for it. The invention allows working both with standard data packages (1), and with data packages (2), and (3) the protocol ones. If working with the standard more useful information can be included in each package (MSDU) than with the Zigbee protocol, regardless of whether it is an *APS* package or an *Application object* package. In turn, the *APS* packages allow more useful information to be included than the packages in the last application layer, *Application object* (2 bytes more).

Figure 4 has used the following references:
Header (or H in the case of the application object package)
PHY= physical layer
MAC= MAC (Medium Access Control) layer
NWK= Network Layer
APL= Application Layer
   APS= Application Support Sublayer
   Application object= application sublayer
PPDU = PHY protocol data unit
PSDU = PHY service data unit
MPDU = MAC protocol data unit
MSDU = MAC service data unit
NPDU = NWK protocol data unit
NSDU = NWK service data unit
APDU = APS protocol data unit
ASDU = APS service data unit
AF = Application Framework

Where:
- PDU = Is the whole package, including the header
- SDU = Is the useful part of the package, suitable for transporting data. It is the package without the header.

The values placed above the headers indicate their size, in bytes

## Claims

1. Two-directional wireless communication method suitable for transmitting a voice, audio or video message in real time from a first terminal to a second terminal, where said message is divided into a plurality of digitalized packages, and suitable for transmitting a second voice, audio or video message in real time from said second terminal to said first terminal, where said second message is divided into a plurality of digitalized second packages, **characterized in that** it comprises the following stages:
a - an at least partially asynchronous communication network is set up that comprises both terminals, suitable for setting up communication between both terminals, with a communication speed of 250 kbps, 40 kbps or 20 kbps, where said communication incorporates the DSSS spread spectrum modulation technique using a set frequency, where each of the two terminals, before transmitting, listens to see if the frequency at which it is going to transmit is free, where each of said terminals encodes the packages and second packages before transmitting them, using a codec that has a maximum bandwidth of 85 kbps, and subsequently decodes them,
b - it is defined that said communication between said first terminal and said second terminal must be without transmitting confirmation messages,
c1 - said first terminal starts a sequence encoding said packages, so that each time the encoding of one of said packages finishes, the encoding of the next of said packages begins,
c2 - said second terminal starts an encoding sequence of said second packages, so that each time the encoding of one of said second packages finishes, the encoding of the next of said second packages begins, where said second terminal loads into a memory each of said second packages whose encoding has been completed,
where said encoding sequences of stages c1 and c2 are carried out in parallel and, also the following stages occur in parallel with said encoding sequences:
d - once the encoding of the first of said packages has finished, said first terminal transmits the first of said packages, and said first terminal starts a sequence in which it transmits the next of said packages as soon as it is encoded until the message is finished,
e - each time that said second terminal correctly receives one of said packages, it transmits to said first terminal the last second encoded package that it has loaded into said memory.

2. Method according to claim 1, **characterized in that** it uses data packages according to the IEEE 802.15.4 standard.

3. Method according to claim 1, **characterized in that** it uses data packages according to the IEEE 802.15.4 standard but with the reduced MAC header.

4. Method according to claim 3, **characterized in that**, once the communication is set up, said MAC header has been reduced by 16 bytes in the addressing field, using reduced addresses of two bytes in length both for the first terminal and for the second terminal, so that the addressing field is reduced from 20 bytes to 4 bytes.

5. Method according to claim 1, **characterized in that** it uses data packages in the APL application layer, either in the APS sublayer or in the Application object sublayer, according to the Zigbee protocol.

6. Method according to claim 5, **characterized in that**, once the communication is set up, the MAC header of said data packages has been reduced by 14 bytes in the addressing field, using reduced addresses of two bytes in length both for the first terminal and for the second terminal, and using 2 bytes to identify the network, so that the addressing field is reduced from 20 bytes to 6 bytes.

7. Method according to any of the claims 1 to 6, **characterized in that** one of the terminals acts as co-ordinator, as defined in the IEEE 802.15.4 standard.

8. Method according to any of the claims 1 to 7, **characterized in that** said communication network is completely asynchronous.

9. Method according to claim 8, **characterized in that** repeater nodes are included to increase coverage.

10. Method according to any of the claims 1 to 9, **characterized in that** said first terminal numbers said packages and said second terminal controls the number of the package received, disregarding it if the number coincides with that of a package that has already been received.

11. Method according to any of the claims 1 to 10, **characterized in that** said communication speed is 250 kbps.

12. Method according to any of the claims 1 to 11, **characterized in that** each of said terminals sets up a reception time during which it remains listening to receive the package transmitted by the other terminal, and outside which it disregards any reception considering it to be an interference, where said first terminal starts said reception time once it has sent the previous package and where said second terminal starts said reception time just before it sends the next second package.

13. Method according to any of the claims 1 to 12, **characterized in that** it comprises, in addition, the following stage before said stages c1 and c2:
c0 - said first terminal abandons a low energy consumption mode and waits for said second terminal to abandon a low energy consumption mode and transmit to said first terminal a query as to whether it wants to start communication.

14. Method according to any of the claims 1 to 13, **characterized in that** said encoding sequences in said stages c1 and c2 are time shifted so that said second terminal finishes encoding each of said second packages before receiving the corresponding package.

15. Communication system comprising at least two terminals, where each of said terminals comprises a device for emitting and receiving radio signals within one of the frequency bands in the group made up of 2'4 GHz, 915 MHz and 868 MHz bands, and a logical circuit comprising a microprocessor, suitable for running the method according to any of the claims 1 to 14.

16. Communication terminal comprising a device for emitting and receiving radio signals within one of the frequency bands in the group made up of 2'4 GHz, 915 MHz and 868 MHz bands, and a logical circuit comprising a microprocessor, suitable for running the method according to any of the claims 1 to 14.

17. Use of the IEEE 802.15.4 standard to implement the method according to any of the claims 1 to 14.

18. Use of the Zigbee protocol to implement the method according to any of the claims 1 to 14.

19. Use of a terminal compatible with the IEEE 802.15.4 standard to run the method according to any of the claims 1 to 14.

20. Use of a terminal compatible with the Zigbee protocol to run the method according to any of the claims 1 to 14.
